(19) Europäisches Patentamt
European Patent Office
Office européen des brevets

(11) **EP 3 944 098 A1**

(12) **EUROPEAN PATENT APPLICATION**
published in accordance with Art. 153(4) EPC

(43) Date of publication:
**26.01.2022 Bulletin 2022/04**

(51) International Patent Classification (IPC):
***G06F 16/35*** (2019.01)     ***G06F 16/36*** (2019.01)
***G06F 40/35*** (2020.01)

(21) Application number: **19919862.3**

(22) Date of filing: **19.11.2019**

(52) Cooperative Patent Classification (CPC):
**G06F 16/35; G06F 16/36; G06F 40/35**

(86) International application number:
**PCT/JP2019/045193**

(87) International publication number:
**WO 2020/188883 (24.09.2020 Gazette 2020/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **20.03.2019 JP 2019052125**

(71) Applicant: SCREEN Holdings Co., Ltd.
**Kyoto 602-8585 (JP)**

(72) Inventors:
• **KITAMURA, Kazuhiro
Kyoto-shi, Kyoto 602-8585 (JP)**

• **KASUBUCHI, Kiyotaka
Kyoto-shi, Kyoto 602-8585 (JP)**
• **MIYAI, Kiyotaka
Kyoto-shi, Kyoto 602-8585 (JP)**
• **YOSHIDA, Akiko
Kyoto-shi, Kyoto 602-8585 (JP)**
• **TERADA, Manri
Kyoto-shi, Kyoto 602-8585 (JP)**
• **UMEHARA, Koki
Kyoto-shi, Kyoto 602-8585 (JP)**

(74) Representative: **Goddar, Heinz J.
Boehmert & Boehmert
Anwaltspartnerschaft mbB
Pettenkoferstrasse 22
80336 München (DE)**

(54) **SYNONYM DETERMINATION METHOD, COMPUTER-READABLE RECORDING MEDIUM IN WHICH SYNONYM DETERMINATION PROGRAM IS RECORDED, AND SYNONYM DETERMINATION DEVICE**

(57) A synonym determination method includes the steps of: converting words contained in a document into first vectors representing meanings of the words; obtaining a word similarity on the basis of the first vectors; converting sentences contained in the document into second vectors representing meanings of the sentences; obtaining a sentence similarity on the basis of the second vectors; classifying the words contained in the document according to topic; and determining whether the words contained in the document are synonyms on the basis of the word similarity, the sentence similarity, and the result of topic classification. Thus, the synonym determination method is provided so as to allow highly accurate automatic synonym determination.

EP 3 944 098 A1

## FIG. 3

```
                    ┌─────────┐
                    │  START  │
                    └─────────┘
                         │
                         ▼
        ┌─────────────────────────────────┐
        │          INPUT DOCUMENT          │ ──── S110
        └─────────────────────────────────┘
                         │
                         ▼
        ┌─────────────────────────────────┐
        │      PRE-PROCESS INPUT DOCUMENT  │ ──── S120
        └─────────────────────────────────┘
                         │
                         ▼
        ┌─────────────────────────────────┐
        │   CONVERT WORDS CONTAINED IN     │
        │   PRE-PROCESSED DOCUMENT         │ ──── S130
        │   INTO VECTORS USING word2vec    │
        └─────────────────────────────────┘
                         │
                         ▼
        ┌─────────────────────────────────┐
        │     OBTAIN WORD SIMILARITY       │
        │     BASED ON OBTAINED VECTORS    │ ──── S140
        └─────────────────────────────────┘
                         │
                         ▼
        ┌─────────────────────────────────┐
        │   CONVERT SENTENCES CONTAINED IN │
        │   PRE-PROCESSED DOCUMENT         │ ──── S150
        │   INTO VECTORS USING doc2vec     │
        └─────────────────────────────────┘
                         │
                         ▼
        ┌─────────────────────────────────┐
        │     OBTAIN SENTENCE SIMILARITY   │
        │     BASED ON OBTAINED VECTORS    │ ──── S160
        └─────────────────────────────────┘
                         │
                         ▼
        ┌─────────────────────────────────┐
        │   PERFORM TOPIC CLASSIFICATION   │
        │   ON PRE-PROCESSED DOCUMENT USING LDA │ ──── S170
        └─────────────────────────────────┘
                         │
                         ▼
        ┌─────────────────────────────────┐
        │  PERFORM SYNONYM DETERMINATION BASED ON │
        │  WORD SIMILARITY, SENTENCE SIMILARITY,  │ ──── S180
        │  AND TOPIC CLASSIFICATION RESULT        │
        └─────────────────────────────────┘
                         │
                         ▼
        ┌─────────────────────────────────┐
        │     OUTPUT SYNONYM DICTIONARY    │ ──── S190
        └─────────────────────────────────┘
                         │
                         ▼
                    ┌─────────┐
                    │   END   │
                    └─────────┘
```

**Description**

TECHNICAL FIELD

The present invention relates to a synonym determination method, a synonym determination program, and a synonym determination device which are intended to determine whether words contained in a document are synonyms.

BACKGROUND ART

Synonyms refer to words that differ in notation or form but have nearly the same meaning. For example, the words "present" and "gift" are synonyms. The words "illness", "sickness", and "disease" can usually be said to be synonyms, even though strictly speaking, these words slightly vary in meaning. The cases considered below are those where English is used. Note that the following descriptions do not depend on the type of language.

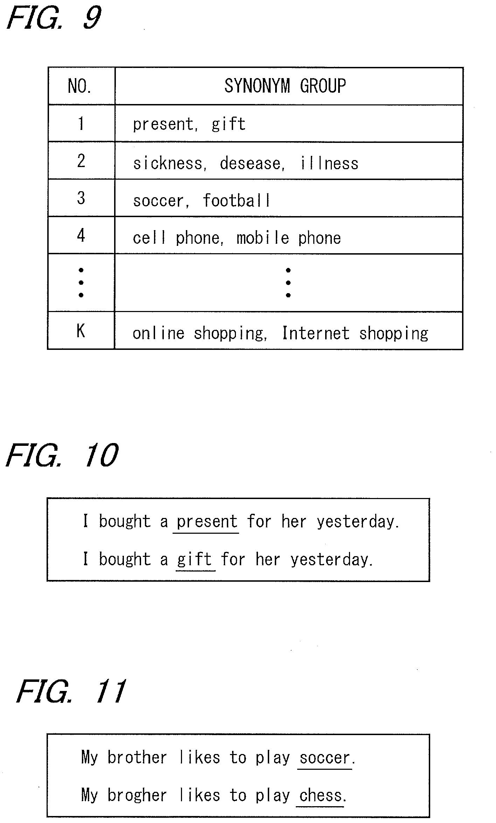

FIG. 9 is a diagram showing an example synonym dictionary. Each row shown in FIG. 9 lists a synonym group containing a plurality of words. Synonym dictionaries are used, for example, for preventing inconsistency in word notation when various documents, such as manuals and instructions, are created.

Most conventional synonym dictionaries are manually created. However, manually creating a synonym dictionary takes long time and requires much effort. Moreover, when a synonym dictionary is created in collaboration of a plurality of workers, the synonym dictionary might vary in quality due to different criteria of synonym determination between the workers. Accordingly, synonym dictionaries are required to be automatically created.

In the field of natural language processing, there is a known technique called word2vec for converting words contained in a document into vectors. By applying word2vec, words contained in a document are converted into n-dimensional (where n is an integer of 2 or more) vectors that represent meanings of the words. FIG. 10 is a diagram showing example sentences containing synonyms. In the examples shown in FIG. 10, the words "present" and "gift" occur at the same position in the respective sentences. Such words as being close in meaning are characterized by occurring at the same position or close positions in the respective sentences. Word2vec uses such a characteristic to convert words into vectors.

In the case of words Wa and Wb having close meanings, vectors Va and Vb respectively corresponding to words Wa and Wb are closely positioned in an n-dimensional space. The closer vectors Va and Vb are, the closer the meanings of words Wa and Wb are. Accordingly, in a conceivable method, words Wa and Wb are determined to be synonyms, for example, when vectors Va and Vb have a cosine similarity greater than or equal to a threshold.

Word2vec is described in Non-Patent Documents 1 and 2. Patent Document 1 describes a synonym pair acquisition device for obtaining a synonym pair on the basis of a meaning similarity obtained using word2vec and a sound similarity based on readings of words.

In the field of natural language processing, there are known techniques called doc2vec and Latent Dirichlet Allocation (referred to below as LDA): doc2vec is extended from word2vec for dealing with sentences to convert sentences contained in a document into vectors, and LDA is intended to classify words contained in a document according to topic (subject or genre). Doc2vec is described in Non-Patent Document 3, and LDA is described in Non-Patent Document 4.

Citation List

Patent Documents

Patent Document 1: Japanese Laid-Open Patent Publication No. 2016-224482

Non-Patent Documents

Non-Patent Document 1: Tomas Mikolov, Kai Chen, Greg Corrado, and Jeffrey Dean, "Efficient Estimation of Word Representations in Vector Space", arXiv : 1301.3781v3, 2013.
Non-Patent Document 2: Tomas Mikolov, Ilya Sutskever, Kai Chen, Greg S. Corrado, and Jeffrey Dean, "Distributed Representations of Words and Phrases and their Compositionality", In Advances in Neural Information Processing Systems 26: 27th Annual Conference on Neural Information Processing Systems 2013.
Non-Patent Document 3: Quoc Le, and Tomas Mikolov, "Distributed representations of Sentences and Documents", International Conference on Machine Learning, Vol. 14, pp. 1188-1196, 2014.
Non-Patent Document 4: David M. Blei, Andrew Y. Ng, and Michael I. Jordan, "Latent Dirichlet Allocation", Journal of Machine Learning Research, Vol. 3, No. Jan, pp. 993-1022, 2003.

SUMMARY OF THE INVENTION

PROBLEMS TO BE SOLVED BY THE INVENTION

As described above, using word2vec renders it possible to perform automatic synonym determination. However, there is a problem with synonym determination using word2vec, because it is difficult to achieve practical determination accuracy. FIG. 11 is a diagram showing example sentences containing words that are not synonyms. In the examples shown in FIG. 11, the words "soccer" and "chess" occur at the same position in the respective sentences. However, the words "soccer" and "chess" are not synonyms. In the case of synonym determination using word2vec, words that are at the same position in respective sentences but differ in meaning might be determined to be synonyms. Moreover, there is another problem in that it is a troublesome task to manually correct an automatically created synonym dictionary.

Therefore, an objective of the present invention is to provide a synonym determination method, a synonym determination program, and a synonym determination device which allow highly accurate automatic synonym determination.

SOLUTION TO THE PROBLEMS

A first aspect of the present invention provides a synonym determination method including the steps of:

converting words contained in a document into first vectors representing meanings of the words;
obtaining a word similarity on the basis of the first vectors;
converting sentences contained in the document into second vectors representing meanings of the sentences;
obtaining a sentence similarity on the basis of the second vectors;
classifying the words contained in the document according to topic; and
determining whether the words contained in the document are synonyms on the basis of the word similarity, the sentence similarity, and the result of topic classification.

A second aspect of the present invention provides the synonym determination method according to the first aspect of the present invention, wherein the determination step includes the steps of:

obtaining an overall similarity between a first word and a second word on the basis of the sentence similarity between a sentence containing the first word and a sentence containing the second word, and the sentence similarity between a sentence containing the first word and a sentence containing the second word; and
determining the first word and the second word to be synonyms in a case where the result of topic classification includes a topic for which probabilities of occurrence of the first and second words are both greater than or equal to a first threshold and the overall similarity between the first word and the second word is greater than or equal to a second threshold, the first word and the second word being determined not to be synonyms in other cases.

A third aspect of the present invention provides the synonym determination method according to the first aspect of the present invention,

obtaining an overall similarity between a first word and a second word on the basis of the sentence similarity between a sentence containing the first word and a sentence containing the second word, and the sentence similarity between a sentence containing the first word and a sentence containing the second word;
obtaining products of probabilities of occurrence of the first and second words and a sum total of the products for all topics on the basis of the result of topic classification; and
determining the first word and the second word to be synonyms in a case where the sum total is greater than or equal to a third threshold and the overall similarity between the first word and the second word is greater than or equal to a second threshold, the first word and the second word being determined not to be synonyms in other cases.

A fourth aspect of the present invention provides the synonym determination method according to the first aspect of the present invention, wherein the step of obtaining the sentence similarity includes the steps of:

obtaining an average vector for the second vectors that correspond to sentences containing a first word;
obtaining an average vector for the second vectors that correspond to sentences containing a second word; and
obtaining a cosine similarity between the two average vectors as the sentence similarity between the sentences containing the first word and the sentences containing the second word.

A fifth aspect of the present invention provides the synonym determination method according to the first aspect of the present invention, wherein the step of obtaining the sentence similarity includes the steps of:

> obtaining cosine similarities between the second vectors that correspond to sentences containing a first word and the second vectors that correspond to sentences containing a second word for all combinations of the sentences containing the first word and the sentences containing the second word; and
> obtaining an average of the cosine similarities as the sentence similarity between the sentences containing the first word and the sentences containing the second word.

A sixth aspect of the present invention provides the synonym determination method according to the first aspect of the present invention, wherein in the step of obtaining the word similarity, the similarity is obtained between a first word and a second word by obtaining a cosine similarity between the first vector that corresponds to the first word and the first vector that corresponds to the second word.

A seventh aspect of the present invention provides a computer-readable recording medium having a synonym determination program recorded therein, causing a CPU to use memory and execute the steps of:

> converting words contained in a document into first vectors representing meanings of the words;
> obtaining a word similarity on the basis of the first vectors;
> converting sentences contained in the document into second vectors representing meanings of the sentences;
> obtaining a sentence similarity on the basis of the second vectors;
> classifying the words contained in the document according to topic; and
> determining whether the words contained in the document are synonyms on the basis of the word similarity, the sentence similarity, and the result of topic classification.

A eighth aspect of the present invention provides the computer-readable recording medium according to the seventh aspect of the present invention, wherein the determination step includes the steps of:

> obtaining an overall similarity between a first word and a second word on the basis of the sentence similarity between a sentence containing the first word and a sentence containing the second word, and the sentence similarity between a sentence containing the first word and a sentence containing the second word; and
> determining the first word and the second word to be synonyms in a case where the result of topic classification includes a topic for which probabilities of occurrence of the first and second words are both greater than or equal to a first threshold and the overall similarity between the first word and the second word is greater than or equal to a second threshold, the first word and the second word being determined not to be synonyms in other cases.

A ninth aspect of the present invention provides the computer-readable recording medium according to the seventh aspect of the present invention, wherein the determination step includes the steps of:

> obtaining an overall similarity between a first word and a second word on the basis of the sentence similarity between a sentence containing the first word and a sentence containing the second word, and the sentence similarity between a sentence containing the first word and a sentence containing the second word;
> obtaining products of probabilities of occurrence of the first and second words and a sum total of the products for all topics on the basis of the result of topic classification; and
> determining the first word and the second word to be synonyms in a case where the sum total is greater than or equal to a third threshold and the overall similarity between the first word and the second word is greater than or equal to a second threshold, the first word and the second word being determined not to be synonyms in other cases.

A tenth aspect of the present invention provides the computer-readable recording medium according to the seventh aspect of the present invention, wherein the step of obtaining the sentence similarity includes the steps of:

> obtaining an average vector for the second vectors that correspond to sentences containing a first word;
> obtaining an average vector for the second vectors that correspond to sentences containing a second word; and
> obtaining a cosine similarity between the two average vectors as the sentence similarity between the sentences containing the first word and the sentences containing the second word.

A eleventh aspect of the present invention provides the computer-readable recording medium according to the seventh aspect of the present invention, wherein the step of obtaining the sentence similarity includes the steps of:

obtaining cosine similarities between the second vectors that correspond to sentences containing a first word and the second vectors that correspond to sentences containing a second word for all combinations of the sentences containing the first word and the sentences containing the second word; and

obtaining an average of the cosine similarities as the sentence similarity between the sentences containing the first word and the sentences containing the second word.

A twelfth aspect of the present invention provides the computer-readable recording medium according to the seventh aspect of the present invention, wherein in the step of obtaining the word similarity, the similarity is obtained between a first word and a second word by obtaining a cosine similarity between the first vector that corresponds to the first word and the first vector that corresponds to the second word.

A thirteenth aspect of the present invention provides a synonym determination device including:

a word/vector conversion portion configured to convert words contained in a document into first vectors representing meanings of the words;

a word similarity calculation portion configured to obtain a word similarity on the basis of the first vectors;

a sentence/vector conversion portion configured to convert sentences contained in the document into second vectors representing meanings of the sentences;

a sentence similarity calculation portion configured to obtain a sentence similarity on the basis of the second vectors;

a topic classification portion configured to classify the words contained in the document according to topic; and

a determination portion configured to determine whether the words contained in the document are synonyms on the basis of the word similarity, the sentence similarity, and the result of topic classification.

EFFECT OF THE INVENTION

In the first, seventh, or thirteenth aspect of the invention, synonym determination is performed on the basis of the sentence similarity and the result of topic classification in addition to the word similarity and therefore can be automatically performed with high accuracy.

In the second or eighth aspect of the invention, when there is a topic containing two words for which the word or sentence similarity is high, the two words are determined to be synonyms, and therefore highly accurate synonym determination can be performed on the basis of the word similarity, the sentence similarity, and the result of topic classification.

In the third or ninth aspect of the invention, when there are two words that frequently occur in the same topic, and for the two words, the word or sentence similarity is high, the two words are determined to be synonyms, and therefore highly accurate synonym determination can be performed on the basis of the word similarity, the sentence similarity, and the result of topic classification.

In the fourth or tenth aspect of the invention, the average vectors are obtained for the second vectors that correspond to the sentences containing the first word and the second vectors that correspond to the sentences containing the second word, the cosine similarity is obtained between these two average vectors, and therefore it is possible to obtain a preferable value for the similarity between two sentences.

In the fifth or eleventh aspect of the invention, for all combinations of the sentences containing the first word and the sentences containing the second word, cosine similarities of the second vectors are obtained between the former and the latter type of sentences, and therefore it is possible to obtain a preferable value for the similarity between two sentences.

In the sixth or twelfth aspect of the invention, the cosine similarity between two first vectors is obtained, and therefore it is possible to obtain a preferable value for the similarity between two words.

BRIEF DESCRIPTION OF THE DRAWINGS

FIG. 1 is a block diagram illustrating the configuration of a synonym determination device according to an embodiment of the present invention.

FIG. 2 is a block diagram illustrating the configuration of a computer that operates as the synonym determination device shown in FIG. 1.

FIG. 3 is a flowchart showing the operation of the synonym determination device shown in FIG. 1.

FIG. 4 is a flowchart showing details of step S160 shown in FIG. 3.

FIG. 5 is a diagram showing an example result of topic classification by the synonym determination device shown in FIG. 1.

FIG. 6 is a flowchart showing details of step S180 shown in FIG. 3.

FIG. 7 is a flowchart showing details of the step of obtaining a sentence similarity in a synonym determination device according to a variant.

FIG. 8 is a flowchart showing details of a determination step in the synonym determination device according to the variant.

FIG. 9 is a diagram showing an example synonym dictionary.

FIG. 10 is a diagram showing example sentences containing synonyms.

FIG. 11 is a diagram showing example sentences containing words that are not synonyms.

## MODE FOR CARRYING OUT THE INVENTION

Hereinafter, a synonym determination method, a synonym determination program, a computer-readable recording medium, and a synonym determination device, as provided in accordance with an embodiment of the present invention, will be described with reference to the drawings. The synonym determination method according to the present embodiment is executed using a computer. The synonym determination program according to the present embodiment is a program for executing the synonym determination method using a computer. The computer-readable recording medium according to the present embodiment is a recording medium having the synonym determination program recorded therein. The synonym determination device according to the present embodiment is configured on a computer. The computer that executes the synonym determination program functions as the synonym determination device.

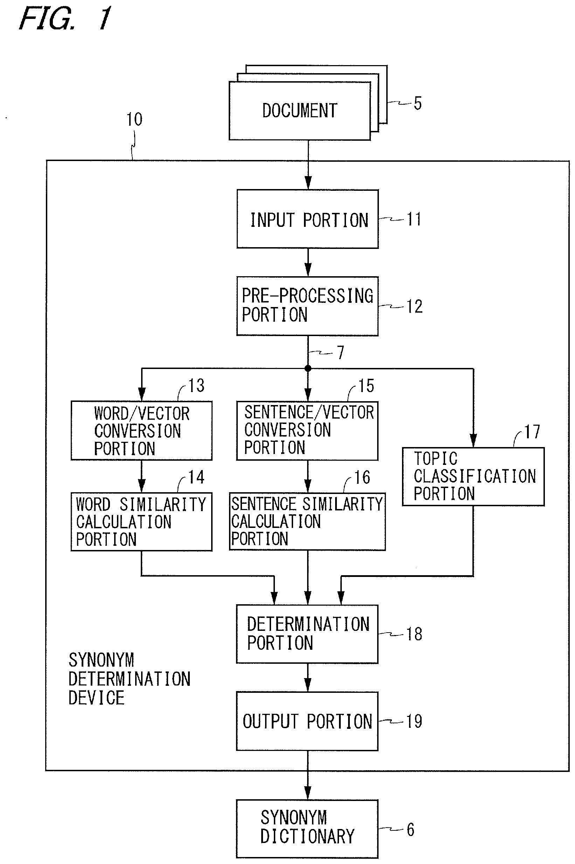

FIG. 1 is a block diagram illustrating the configuration of the synonym determination device according to the embodiment of the present invention. The synonym determination device 10 shown in FIG. 1 includes an input portion 11, a pre-processing portion 12, a word/vector conversion portion 13, a word similarity calculation portion 14, a sentence/vector conversion portion 15, a sentence similarity calculation portion 16, a topic classification portion 17, a determination portion 18, and an output portion 19. The synonym determination device 10 determines whether words contained in an input document 5 are synonyms and outputs a synonym dictionary 6.

The operation of the synonym determination device 10 is as outlined below. The input portion 11 receives a document 5 as an input. The pre-processing portion 12 pre-processes the document 5 inputted to the input portion 11, and outputs a pre-processed document 7. The word/vector conversion portion 13 converts words contained in the pre-processed document 7 into vectors that represent meanings of the words. The word similarity calculation portion 14 obtains a word similarity on the basis of the vectors obtained by the word/vector conversion portion 13. The sentence/vector conversion portion 15 converts sentences contained in the pre-processed document 7 into vectors that represent meanings of the sentences. The sentence similarity calculation portion 16 obtains a sentence similarity on the basis of the vectors obtained by the sentence/vector conversion portion 15. The topic classification portion 17 performs topic classification on the pre-processed document 7. The determination portion 18 performs synonym determination on the basis of the word similarity obtained by the word similarity calculation portion 14, the sentence similarity obtained by the sentence similarity calculation portion 16, and the result of topic classification by the topic classification portion 17. The output portion 19 outputs a synonym dictionary 6 containing synonyms obtained by the determination portion 18.

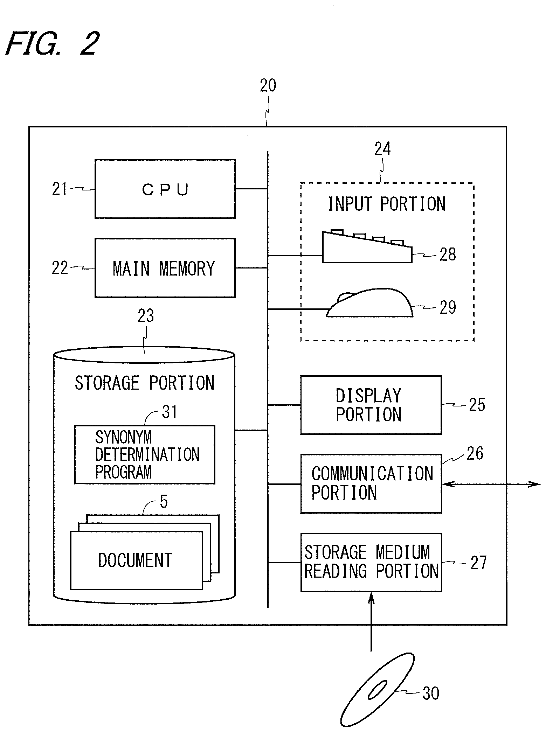

FIG. 2 is a block diagram illustrating the configuration of the computer that functions as the synonym determination device 10. The computer 20 shown in FIG. 2 includes a CPU 21, main memory 22, a storage portion 23, an input portion 24, a display portion 25, a communication portion 26, and a storage medium reading portion 27. An example of the main memory 22 used is a DRAM. An example of the storage portion 23 used is a hard disk or a solid-state drive. The input portion 24 includes, for example, a keyboard 28 and a mouse 29. An example of the display portion 25 used is a liquid crystal display. The communication portion 26 is a wired or wireless communication interface circuit. The storage medium reading portion 27 is an interface circuit for a storage medium 30 having a program or suchlike stored therein. An example of the storage medium 30 used is a non-transitory storage medium such as a CD-ROM, a DVD-ROM, or a USB flash drive.

When the computer 20 executes the synonym determination program 31, the storage portion 23 stores the synonym determination program 31 and the document 5. The synonym determination program 31 and the document 5 may be received from, for example, a server or another computer through the communication portion 26 or may be read out from the storage medium 30 through the storage medium reading portion 27. The recording medium 30 having the synonym determination program 31 recorded therein functions as the computer-readable recording medium according to the present embodiment.

When the synonym determination program 31 is executed, the synonym determination program 31 and the document 5 are copied and transferred to the main memory 22. The CPU 21 uses the main memory 22 as working memory, and executes the synonym determination program 31 stored in the main memory 22, thereby processing the document 5 stored in the main memory 22. At this time, the computer 20 functions as the synonym determination device 10. Note that the configuration of the computer 20, as described above, is merely an illustrative example, and the synonym determination device 10 can be configured on any computer.

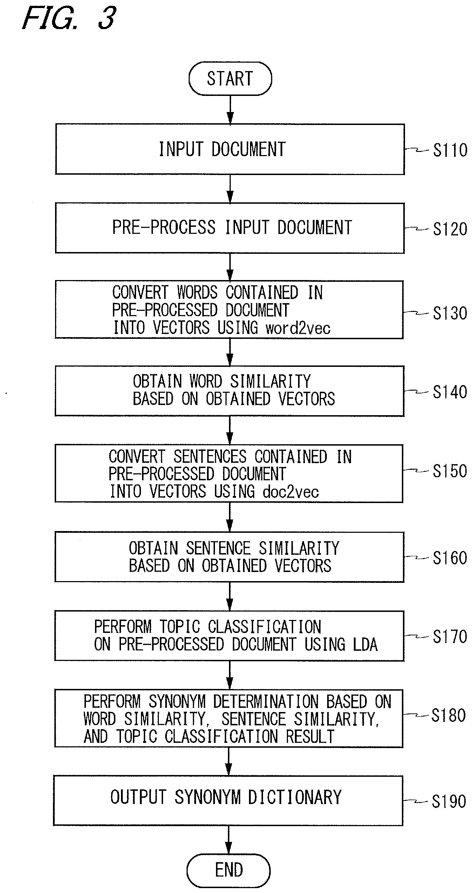

FIG. 3 is a flowchart showing the operation of the synonym determination device 10. The computer 20 executing the synonym determination program 31 functions as the synonym determination device 10. The computer 20 executing step S130 functions as the word/vector conversion portion 13, the computer 20 executing step S140 functions as the word similarity calculation portion 14, the computer 20 executing step S150 functions as the sentence/vector conversion portion 15, the computer 20 executing step S160 functions as the sentence similarity calculation portion 16, the computer 20 executing step S170 functions as the topic classification portion 17, and the computer 20 executing step S180 functions as the determination portion 18.

Initially, the synonym determination device 10 receives a document 5 as an input from which synonyms are obtained (step S110). The input document 5 may be of any type. Next, the synonym determination device 10 pre-processes the input document 5 (step S120). At step S120, the synonym determination device 10 performs the processing of dividing sentences contained in the document 5 into words, the processing of removing noise from the document 5, etc., and outputs a pre-processed document 7.

Next, the synonym determination device 10 converts words contained in the pre-processed document 7 into vectors using word2vec (step S130). At step S130, the words contained in the pre-processed document 7 are converted into n-dimensional (where n is an integer of 2 or more) vectors that represent meanings of the words. Then, the synonym determination device 10 obtains a word similarity on the basis of the vectors obtained at step S130 (the vectors corresponding to the words) (step S140).

Next, the synonym determination device 10 converts sentences contained in the pre-processed document 7 into vectors using doc2vec (step S150). Doc2vec is an extended version of word2vec that is adapted to deal with sentences. At step S150, the sentences contained in the pre-processed document 7 are converted into m-dimensional (where $m$ is an integer of 2 or more) vectors that represent meanings of the sentences. Then, the synonym determination device 10 obtains a sentence similarity on the basis of the vectors obtained at step S150 (the vectors corresponding to the sentences) (step S160).

Next, the synonym determination device 10 performs topic classification on the pre-processed document 7 using LDA (Latent Dirichlet Allocation) (step S170). Then, the synonym determination device 10 determines whether the words contained in the pre-processed document 7 are synonyms on the basis of the word similarity obtained at step S140, the sentence similarity obtained at step S160, and the result of topic classification at step S170 (step S180).

Next, the synonym determination device 10 outputs a synonym dictionary 6 containing the words determined to be synonyms at step S180 (step S190). It is preferable that the synonym dictionary 6 outputted at step S190 be manually checked and corrected.

Steps S130 to S180 will be described in detail below. It is assumed here that the pre-processed document 7 contains $p$ sentences containing word Wa, and $q$ sentences containing word Wb. Moreover, it is assumed that words Wa and Wb are converted into vectors Va and Vb, respectively, at step S130, and it is also assumed that at step S150, the $p$ sentences containing word Wa are converted into $p$ vectors Ua1, Ua2, ..., Uap, and the $q$ sentences containing word Wb into $q$ vectors Ub1, Ub2, ..., Ubq.

The synonym determination device 10 applies word2vec to the pre-processed document 7 at step S130, thereby converting words contained in the pre-processed document 7 into n-dimensional vectors. At step S140, the synonym determination device 10 obtains a cosine similarity between vectors Va and Vb obtained at step S130 and corresponding to words Wa and Wa, respectively, in accordance with equation (1) below. The synonym determination device 10 sets the obtained cosine similarity as the similarity SWab between words Wa and Wb.

$$SWab = \frac{Va \cdot Vb}{|Va||Vb|} \quad \cdots (1)$$

Note that in equation (1), the sign • represents an operation for calculating the inner product of the vectors, and |v| represents the length of vector V. Word2vec has the function of converting a vector that is to be outputted into a unit vector. When this function is used, the following relationship is established: |va| = |vb| = 1, and therefore the calculation of the denominator in equation (1) can be simplified.

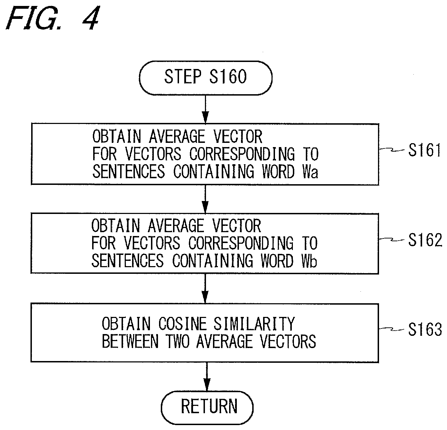

The synonym determination device 10 applies doc2vec to the pre-processed document 7 at step S150, thereby converting sentences contained in the pre-processed document 7 into m-dimensional vectors. FIG. 4 is a flowchart showing details of step S160. At step S160, the synonym determination device 10 processes all pairs of words Wa and Wb contained in the pre-processed document 7, as shown in FIG. 4.

In FIG. 4, the synonym determination device 10 obtains an average vector UMa for the $p$ vectors Ua1, Ua2, ..., Uap corresponding to the $p$ sentences containing word Wa in accordance with equation (2) below (step S161). Then, the synonym determination device 10 obtains an average vector UMb for the $p$ vectors Ub1, Ub2, ..., Ubq corresponding to the $q$ sentences containing word Wb in accordance with equation (3) below (step S162). Then, the synonym determination device 10 obtains a cosine similarity between the two average vectors UMa and UMb obtained at steps S161 and S162, in accordance with equation (4) below (step S163). The synonym determination device 10 sets the obtained cosine similarity as the similarity SSab between the sentences containing word Wa and the sentences containing word Wb.

$$UMa = \frac{Ua1 + Ua2 + \cdots + Uap}{p} \quad \cdots \quad (2)$$

$$UMb = \frac{Ub1 + Ub2 + \cdots + Ubq}{q} \quad \cdots \quad (3)$$

$$SSab = \frac{UMa \cdot UMb}{\left| UMa \right| \left| UMb \right|} \quad \cdots \quad (4)$$

It should be noted that before obtaining the average vector UMa, the synonym determination device 10 may obtain a variance of the *p* vectors Ua1, Ua2, ..., Uap corresponding to the *p* sentences containing word Wa such that the average vector UMa is derived from among all vectors excluding the vectors that fall outside three times the variance. In this case, the synonym determination device 10 performs similar processing when obtaining the average vector UMb.

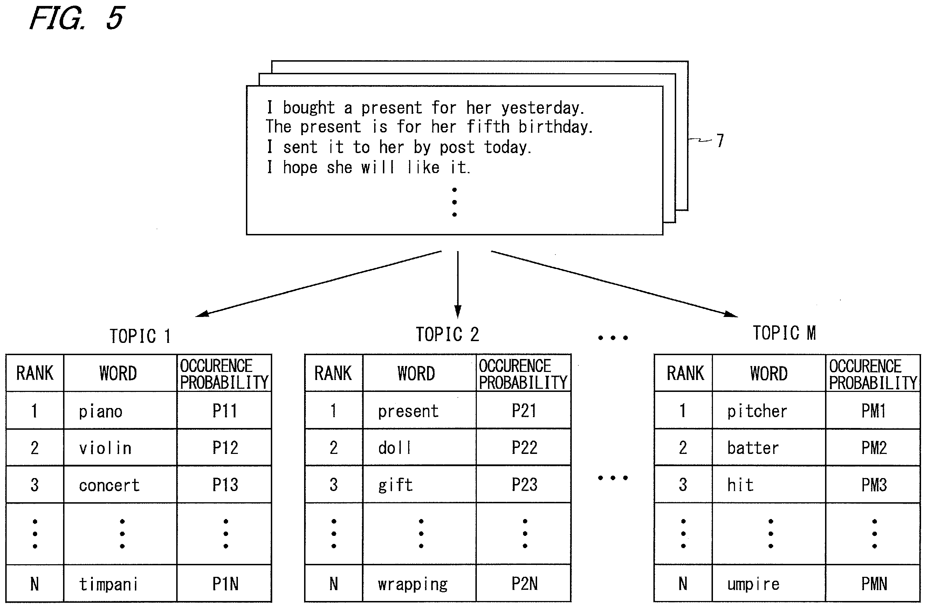

The synonym determination device 10 applies LDA to the pre-processed document 7 at step S170, thereby classifying words contained in the pre-processed document 7 according to topic. FIG. 5 is a diagram showing an example topic classification result. When topic classification is performed, topic-related words and the probability of occurrence of the words are obtained for each of M (where M is an integer of 2 or more) topics, as shown in FIG. 5. In the example shown in FIG. 5, the words that are related to a first topic include "piano", "violin", and "concert". For each topic, words with high probabilities of occurrence well represent the topic. In the example shown in FIG. 5, the first topic is conceivably "music".

In FIG. 5, the application of LDA results in N (where N is an integer of 2 or more) words with high probabilities of occurrence being obtained for each topic, but the number of words to be included in each topic is not limited. When the number of words is not limited, each topic includes all words contained in the document 5, including words with low probabilities of occurrence. Note that the application of LDA renders it possible to classify words according to topic but does not specifically identify each topic.

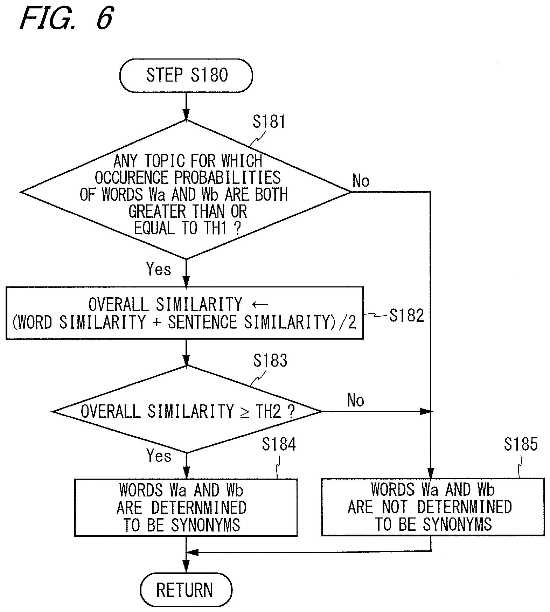

FIG. 6 is a flowchart showing details of step S180. At step S180, the synonym determination device 10 processes all pairs of words Wa and Wb contained in the pre-processed document 7, as shown in FIG. 6.

In FIG. 6, the synonym determination device 10 determines whether the result of topic classification at step S170 includes a topic for which the probabilities of occurrence of words Wa and Wb are both greater than or equal to a threshold TH1 (step S181). The synonym determination device 10 proceeds to step S182 in the case of Yes or step S185 in the case of No.

[0058] In the former case, the synonym determination device 10 obtains an overall similarity Stab between words Wa and Wb in accordance with equation (5) below on the basis of the similarity SWab between words Wa and Wb obtained at step S140 and the similarity SSab between the sentences containing word Wa and the sentences containing word Wb obtained at step S160 (step S182).

$$STab = (SWab + SSab) / 2 \quad \cdots \quad (5)$$

Next, the synonym determination device 10 determines whether the overall similarity STab between words Wa and Wb obtained at step S182 is greater than or equal to a threshold TH2 (step S183). The synonym determination device 10 proceeds to step S184 in the case of Yes or step S185 in the case of No.

[0060] In the former case, the synonym determination device 10 determines that words Wa and Wb are synonyms (step S184). In the case of No at step S181 or S183, the synonym determination device 10 does not determine that words Wa and Wb are synonyms (step S185). The synonym determination device 10 ends step S180 after executing step S184 or S185.

As described above, the synonym determination method according to the present embodiment includes the steps of: converting words contained in a document (pre-processed document 7) into first vectors representing meanings of the words (S130); obtaining a word similarity on the basis of the first vectors (S140); converting sentences contained in the document into second vectors representing meanings of the sentences (S150); obtaining a sentence similarity on the basis of the second vectors (S160); classifying the words contained in the document according to topic (S170); and determining whether the words contained in the document are synonyms on the basis of the word similarity, the sentence similarity, and the result of topic classification (S180). In the synonym determination method according to the present embodiment, synonym determination is performed on the basis of the sentence similarity and the result of topic classification in addition to the word similarity, and therefore it is possible to perform highly accurate automatic synonym determination.

The determination step (S180) includes the steps of: obtaining an overall similarity Stab between a first word Wa and a second word Wb on the basis of the similarity Swab between sentences containing the first word Wa and sentences containing the second word Wb and the similarity SSab between sentences containing the first word Wa and sentences containing the second word Wb (S182); and in the case where the result of topic classification includes a topic for which probabilities of occurrence of the first and second words Wa and Wb are both greater than or equal to the first threshold TH1 and the first and second words Wa and Wb have an overall similarity STab greater than or equal to the second threshold TH2, determining that the first word Wa and the second word Wb are synonyms or, in other cases, determining the first word Wa and the second word Wb are not synonyms (S181 and S183 to S185). In this manner, when there is a topic that includes two words Wa and Wb, and for these two words Wa and Wb, both the word similarity Swab and the sentence similarity SSab are high, these two words Wa and Wb are determined to be synonyms, and therefore it is possible to perform synonym determination with high accuracy on the basis of the word similarity Swab, the sentence similarity SSab, and the result of topic classification.

The step of obtaining the sentence similarity (S160) includes the steps of: obtaining an average vector UMa for second vectors that correspond to the sentences containing the first word Wa (S161); obtaining an average vector UMb for second vectors that correspond to the sentences containing the second word Wb (S162); and obtaining a cosine similarity between the two average vectors UMa and UMb as a similarity SSab between the sentences containing the first word Wa and the sentences containing the second word Wb (S163). Thus, it is possible to obtain a preferable value for the similarity SSab between the sentences containing the first word Wa and the sentences containing the second word Wb.

In the step of obtaining the word similarity (S140), the similarity Swab obtained between the first word Wa and the second word Wb is a cosine similarity between a first vector Va that corresponds to the first word Wa and a first vector Vb that corresponds to the second word Wb. Thus, it is possible to obtain a preferable value for the similarity Swab between the two words Wa and Wb.

In the step of converting the words into the first vectors (S130), word2vec is applied to the document, in the step of converting the sentences into the second vectors (S150), doc2vec is applied to the document, and in the step of classifying the words according to topic (S170), Latent Dirichlet Allocation is applied to the document. Accordingly, it is possible to perform highly accurate automatic synonym determination based on the results of: obtaining the first vectors, which represent the meanings of the words, using word2vec; obtaining the second vectors, which represent the meanings of the sentences, using doc2vec; and performing topic classification using Latent Dirichlet Allocation.

The synonym determination program 31, the computer-readable recording medium 30 with the synonym determination program 31 recorded therein, and the synonym determination device 10, as provided in accordance with the present embodiment, have features similar to those of the synonym determination method as described above and achieve effects similar to those achieved by the synonym determination method. Moreover, numerous variants can be created for the synonym determination method, the synonym determination program 31, the computer-readable recording medium 30 with the synonym determination program 31 recorded therein, and the synonym determination device 10, as provided in accordance with the present embodiment. For example, the order of performing steps S130 to S170 may be arbitrary, so long as step S140 is performed after step S130 and step S160 is performed after step S150.

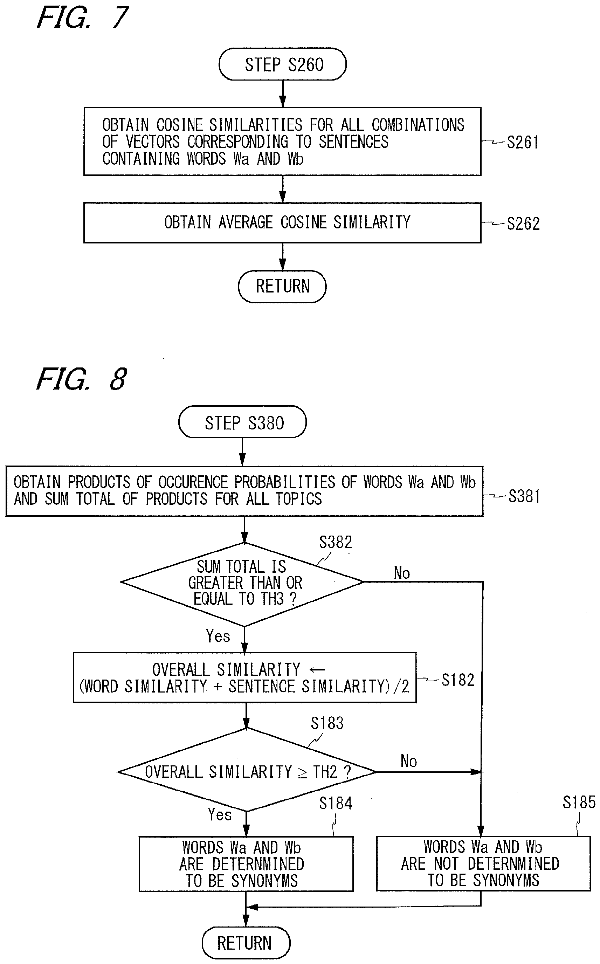

In a variant, the synonym determination device may perform step S260 shown in FIG. 7 instead of step S160 shown in FIG. 4 in order to obtain a sentence similarity. In FIG. 7, the synonym determination device according to the variant obtains cosine similarities for all combinations of $p$ vectors Ua1, Ua2, ..., Uap corresponding to $p$ sentences containing word Wa and $q$ vectors Ub1, Ub2, ..., Ubq corresponding to $q$ sentences containing word Wb (step S261). At step S261, the synonym determination device according to the variant selects a vector Uai (where i is an integer from 1 to $p$) from among the $p$ vectors Ua1, Ua2, ..., Uap and a vector Ubj (where $j$ is an integer from 1 to $q$) from among the $q$ vectors Ub1, Ub2, ..., Ubq, and obtains a cosine similarity SUij in accordance with equation (6) below. The synonym determination device according to the variant performs the above processing ($p \times q$) times, thereby obtaining ($p \times q$) cosine similarities.

$$SU_{ij} = \frac{Ua_i \cdot Ub_j}{|Ua_i||Ub_j|} \quad \cdots (6)$$

Next, the synonym determination device according to the variant obtains an average of the ($p \times q$) cosine similarities obtained at step S261 (step S262). The synonym determination device according to the variant sets the obtained average as the similarity between the sentences containing word Wa and the sentences containing word Wb.

In this manner, in the synonym determination method according to the variant, the step of obtaining the sentence similarity (S260) includes the steps of: obtaining cosine similarities between second vectors that correspond to sentences containing a first word Wa and second vectors that correspond to sentences containing a second word Wb for all combinations of the sentences containing the first word Wa and the sentences containing the second word Wb (S261); and obtaining an average of the cosine similarities as the similarity between the sentences containing the first word Wa and the sentences containing the second word Wb (S262). Thus, it is possible to obtain a preferable value for the similarity SSab between the sentences containing the first word Wa and the sentences containing the second word Wb.

The synonym determination device according to the variant may perform step S380 shown in FIG. 8 instead of step S180 shown in FIG. 6 in order to perform synonym determination. In FIG. 8, for all topics obtained at step S170, the synonym determination device according to the variant obtains the products of the probabilities of occurrence of words Wa and Wb in the topics and the sum total of the obtained products (step S381). In the case where the probabilities of occurrence of words Wa and Wb in the $k$'th (where k is an integer from 1 to M) topic are Pka and Pkb, respectively, the synonym determination device according to the variant obtains a sum total SUM at step S381 in accordance with the following equation (7):

$$SUM = \sum_{k=1}^{M} Pka\, Pkb \quad \cdots \quad (7)$$

Next, the synonym determination device according to the variant determines whether the sum total SUM obtained at step S381 is greater than or equal to a threshold TH3 (step S382). The synonym determination device 10 proceeds to step S182 in the case of Yes or step S185 in the case of No. The subsequent processing is the same as in the case of step S180.

In this manner, in the synonym determination method according to the variant, the determination step (S380) includes the steps of: obtaining an overall similarity Stab between a first word Wa and a second word Wb on the basis of the similarity Swab between sentences containing the first word Wa and sentences containing the second word Wb and the similarity SSab between sentences containing the first word Wa and sentences containing the second word Wb (S182); obtaining the products of the probabilities of occurrence of the first and second words Wa and Wb and the sum total SUM of the products for all topics on the basis of the result of topic classification (S381); and, in the case where the sum total SUM is greater than or equal to the third threshold TH3 and the overall similarity Stab between the first word Wa and the second word Wb is greater than or equal to the second threshold TH2, determining that the first word Wa and the second word Wb are synonyms or, in other cases, determining that the first word Wa and the second word Wb are not synonyms (S382 and S183 to S185). In this manner, when the two words Wa and Wb frequently occur in the same topic, and for the two words Wa and Wb, both the word similarity Swab and the sentence similarity SSab are high, the two words Wa and Wb are determined to be synonyms, so that synonym determination can be performed with high accuracy on the basis of the word similarity, the sentence similarity, and the result of topic classification.

This application claims the priority of Japanese Patent Application No. 2019-52125 entitled "Synonym Determination Method, Synonym Determination Program and Synonym Determination Device", filed March 20, 2019, the content of which is incorporated herein by reference.

DESCRIPTION OF THE REFERENCE CHARACTERS

| | |
|---|---|
| 5 | document |
| 6 | synonym dictionary |
| 7 | pre-processed document |
| 10 | synonym determination device |
| 11 | input portion |
| 12 | pre-processing portion |
| 13 | word/vector conversion portion |
| 14 | word similarity calculation portion |
| 15 | sentence/vector conversion portion |
| 16 | sentence similarity calculation portion |
| 17 | topic classification portion |
| 18 | determination portion |
| 19 | output portion |

20 computer
21 CPU
22 main memory
30 recording medium
31 synonym determination program

**Claims**

1. A synonym determination method comprising the steps of:

   converting words contained in a document into first vectors representing meanings of the words;
   obtaining a word similarity on the basis of the first vectors;
   converting sentences contained in the document into second vectors representing meanings of the sentences;
   obtaining a sentence similarity on the basis of the second vectors;
   classifying the words contained in the document according to topic; and
   determining whether the words contained in the document are synonyms on the basis of the word similarity, the sentence similarity, and the result of topic classification.

2. The synonym determination method according to claim 1, wherein the determination step includes the steps of:

   obtaining an overall similarity between a first word and a second word on the basis of the sentence similarity between a sentence containing the first word and a sentence containing the second word, and the sentence similarity between a sentence containing the first word and a sentence containing the second word; and
   in a case where the result of topic classification includes a topic for which probabilities of occurrence of the first and second words are both greater than or equal to a first threshold and the overall similarity between the first word and the second word is greater than or equal to a second threshold, determining that the first word and the second word are synonyms or, in other cases, determining that the first word and the second word are not synonyms.

3. The synonym determination method according to claim 1, wherein the determination step includes the steps of:

   obtaining an overall similarity between a first word and a second word on the basis of the sentence similarity between a sentence containing the first word and a sentence containing the second word, and the sentence similarity between a sentence containing the first word and a sentence containing the second word;
   obtaining products of probabilities of occurrence of the first and second words and a sum total of the products for all topics on the basis of the result of topic classification; and
   in a case where the sum total is greater than or equal to a third threshold and the overall similarity between the first word and the second word is greater than or equal to a second threshold, determining that the first word and the second word are synonyms or, in other cases, determining that the first word and the second word are not synonyms.

4. The synonym determination method according to claim 1, wherein the step of obtaining the sentence similarity includes the steps of:

   obtaining an average vector for the second vectors that correspond to sentences containing a first word;
   obtaining an average vector for the second vectors that correspond to sentences containing a second word; and
   obtaining a cosine similarity between the two average vectors as the sentence similarity between the sentences containing the first word and the sentences containing the second word.

5. The synonym determination method according to claim 1, wherein the step of obtaining the sentence similarity includes the steps of:

   obtaining cosine similarities between the second vectors that correspond to sentences containing a first word and the second vectors that correspond to sentences containing a second word for all combinations of the sentences containing the first word and the sentences containing the second word; and
   obtaining an average of the cosine similarities as the sentence similarity between the sentences containing the first word and the sentences containing the second word.

6. The synonym determination method according to claim 1, wherein in the step of obtaining the word similarity, the similarity is obtained between a first word and a second word by obtaining a cosine similarity between the first vector that corresponds to the first word and the first vector that corresponds to the second word.

7. A computer-readable recording medium having a synonym determination program recorded therein, causing a CPU to use memory and execute the steps of:

   converting words contained in a document into first vectors representing meanings of the words;
   obtaining a word similarity on the basis of the first vectors;
   converting sentences contained in the document into second vectors representing meanings of the sentences;
   obtaining a sentence similarity on the basis of the second vectors;
   classifying the words contained in the document according to topic; and
   determining whether the words contained in the document are synonyms on the basis of the word similarity, the sentence similarity, and the result of topic classification.

8. The computer-readable recording medium according to claim 7, wherein the determination step includes the steps of:

   obtaining an overall similarity between a first word and a second word on the basis of the sentence similarity between a sentence containing the first word and a sentence containing the second word, and the sentence similarity between a sentence containing the first word and a sentence containing the second word; and
   in a case where the result of topic classification includes a topic for which probabilities of occurrence of the first and second words are both greater than or equal to a first threshold and the overall similarity between the first word and the second word is greater than or equal to a second threshold, determining that the first word and the second word are synonyms or, in other cases, determining that the first word and the second word are not synonyms.

9. The computer-readable recording medium according to claim 7, wherein the determination step includes the steps of:

   obtaining an overall similarity between a first word and a second word on the basis of the sentence similarity between a sentence containing the first word and a sentence containing the second word, and the sentence similarity between a sentence containing the first word and a sentence containing the second word;
   obtaining products of probabilities of occurrence of the first and second words and a sum total of the products for all topics on the basis of the result of topic classification; and
   in a case where the sum total is greater than or equal to a third threshold and the overall similarity between the first word and the second word is greater than or equal to a second threshold, determining that the first word and the second word are synonyms or, in other cases, determining that the first word and the second word are not synonyms.

10. The computer-readable recording medium according to claim 7, wherein the step of obtaining the sentence similarity includes the steps of:

    obtaining an average vector for the second vectors that correspond to sentences containing a first word;
    obtaining an average vector for the second vectors that correspond to sentences containing a second word; and
    obtaining a cosine similarity between the two average vectors as the sentence similarity between the sentences containing the first word and the sentences containing the second word.

11. The computer-readable recording medium according to claim 7, wherein the step of obtaining the sentence similarity includes the steps of:

    obtaining cosine similarities between the second vectors that correspond to sentences containing a first word and the second vectors that correspond to sentences containing a second word for all combinations of the sentences containing the first word and the sentences containing the second word; and
    obtaining an average of the cosine similarities as the sentence similarity between the sentences containing the first word and the sentences containing the second word.

12. The computer-readable recording medium according to claim 7, wherein in the step of obtaining the word similarity, the similarity is obtained between a first word and a second word by obtaining a cosine similarity between the first vector that corresponds to the first word and the first vector that corresponds to the second word.

**13.** A synonym determination device comprising:

a word/vector conversion portion configured to convert words contained in a document into first vectors representing meanings of the words;

a word similarity calculation portion configured to obtain a word similarity on the basis of the first vectors;

a sentence/vector conversion portion configured to convert sentences contained in the document into second vectors representing meanings of the sentences;

a sentence similarity calculation portion configured to obtain a sentence similarity on the basis of the second vectors;

a topic classification portion configured to classify the words contained in the document according to topic; and

a determination portion configured to determine whether the words contained in the document are synonyms on the basis of the word similarity, the sentence similarity, and the result of topic classification.

*FIG. 1*

```
                              ┌───────────────┐
                              │  DOCUMENT     │──5
                              └───────┬───────┘
   10                                 │
    │    ┌─────────────────────────────┼─────────────────────────────┐
    │    │                             ▼                              │
         │                   ┌──────────────────┐                     │
         │                   │  INPUT PORTION    │──11                │
         │                   └────────┬─────────┘                     │
         │                            ▼                               │
         │                   ┌──────────────────┐                     │
         │                   │ PRE-PROCESSING    │──12                │
         │                   │ PORTION           │                    │
         │                   └────────┬─────────┘                     │
         │                            │──7                            │
         │        ┌───────────────────┼──────────────────┐           │
         │        ▼                   ▼                   ▼           │
         │  ┌──────────────┐   ┌──────────────┐   ┌──────────────┐   │
         │  │ WORD/VECTOR  │13 │SENTENCE/VECTOR│15 │  TOPIC       │17 │
         │  │ CONVERSION   │   │ CONVERSION   │   │ CLASSIFICATION│   │
         │  │ PORTION      │   │ PORTION      │   │ PORTION      │   │
         │  └──────┬───────┘   └──────┬───────┘   └──────┬───────┘   │
         │         ▼                  ▼                   │          │
         │  ┌──────────────┐14 ┌──────────────┐16         │          │
         │  │WORD SIMILARITY│   │SENTENCE SIMILARITY│      │          │
         │  │CALCULATION    │   │CALCULATION    │          │          │
         │  │PORTION        │   │PORTION        │          │          │
         │  └──────┬───────┘   └──────┬───────┘            │          │
         │         └──────────────────┼────────────────────┘          │
         │                            ▼                               │
         │                   ┌──────────────────┐                     │
         │                   │ DETERMINATION     │──18                │
         │                   │ PORTION           │                    │
         │                   └────────┬─────────┘                     │
         │  SYNONYM                   ▼                               │
         │  DETERMINATION    ┌──────────────────┐                     │
         │  DEVICE           │ OUTPUT PORTION    │──19                │
         │                   └────────┬─────────┘                     │
         └────────────────────────────┼─────────────────────────────┘
                                      ▼
                             ┌──────────────────┐
                             │   SYNONYM         │──6
                             │ DICTIONARY        │
                             └──────────────────┘
```

*FIG. 2*

20

21 — CPU

24

INPUT PORTION

28

29

22 — MAIN MEMORY

23

STORAGE PORTION

31

SYNONYM DETERMINATION PROGRAM

5

DOCUMENT

DISPLAY PORTION — 25

COMMUNICATION PORTION — 26

STORAGE MEDIUM READING PORTION — 27

30

# FIG. 3

START

INPUT DOCUMENT — S110

PRE-PROCESS INPUT DOCUMENT — S120

CONVERT WORDS CONTAINED IN
PRE-PROCESSED DOCUMENT
INTO VECTORS USING word2vec — S130

OBTAIN WORD SIMILARITY
BASED ON OBTAINED VECTORS — S140

CONVERT SENTENCES CONTAINED IN
PRE-PROCESSED DOCUMENT
INTO VECTORS USING doc2vec — S150

OBTAIN SENTENCE SIMILARITY
BASED ON OBTAINED VECTORS — S160

PERFORM TOPIC CLASSIFICATION
ON PRE-PROCESSED DOCUMENT USING LDA — S170

PERFORM SYNONYM DETERMINATION BASED ON
WORD SIMILARITY, SENTENCE SIMILARITY,
AND TOPIC CLASSIFICATION RESULT — S180

OUTPUT SYNONYM DICTIONARY — S190

END

# FIG. 4

```
                    ( STEP S160 )
                         │
                         ▼
   ┌─────────────────────────────────────┐
   │   OBTAIN AVERAGE VECTOR              │
   │   FOR VECTORS CORRESPONDING TO      │──── S161
   │   SENTENCES CONTAINING WORD Wa       │
   └─────────────────────────────────────┘
                         │
                         ▼
   ┌─────────────────────────────────────┐
   │   OBTAIN AVERAGE VECTOR              │
   │   FOR VECTORS CORRESPONDING TO      │──── S162
   │   SENTENCES CONTAINING WORD Wb       │
   └─────────────────────────────────────┘
                         │
                         ▼
   ┌─────────────────────────────────────┐
   │   OBTAIN COSINE SIMILARITY           │
   │   BETWEEN TWO AVERAGE VECTORS        │──── S163
   └─────────────────────────────────────┘
                         │
                         ▼
                    ( RETURN )
```

## FIG. 5

I bought a present for her yesterday.
The present is for her fifth birthday.
I sent it to her by post today.
I hope she will like it.

⟋ 7

TOPIC 1

| RANK | WORD | OCCURENCE PROBABILITY |
|---|---|---|
| 1 | piano | P11 |
| 2 | violin | P12 |
| 3 | concert | P13 |
| ⋮ | ⋮ | ⋮ |
| N | timpani | P1N |

TOPIC 2

| RANK | WORD | OCCURENCE PROBABILITY |
|---|---|---|
| 1 | present | P21 |
| 2 | doll | P22 |
| 3 | gift | P23 |
| ⋮ | ⋮ | ⋮ |
| N | wrapping | P2N |

· · ·

TOPIC M

| RANK | WORD | OCCURENCE PROBABILITY |
|---|---|---|
| 1 | pitcher | PM1 |
| 2 | batter | PM2 |
| 3 | hit | PM3 |
| ⋮ | ⋮ | ⋮ |
| N | umpire | PMN |

EP 3 944 098 A1

# FIG. 6

STEP S180

S181

ANY TOPIC FOR WHICH
OCCURENCE PROBABILITIES
OF WORDS Wa AND Wb ARE BOTH
GREATER THAN OR
EQUAL TO TH1 ?

No

Yes

OVERALL SIMILARITY ←
(WORD SIMILARITY + SENTENCE SIMILARITY)/2 ⌐—S182

S183

OVERALL SIMILARITY ≥ TH2 ?

No

Yes S184

S185

WORDS Wa AND Wb
ARE DETERNMINED
TO BE SYNONYMS

WORDS Wa AND Wb
ARE NOT DETERNMINED
TO BE SYNONYMS

RETURN

## FIG. 7

```
            ( STEP S260 )
                  │
                  ▼
┌──────────────────────────────────────────┐
│ OBTAIN COSINE SIMILARITIES FOR ALL        │
│ COMBINATIONS OF VECTORS CORRESPONDING     │──S261
│ TO SENTENCES CONTAINING WORDS Wa AND Wb   │
└──────────────────────────────────────────┘
                  │
                  ▼
┌──────────────────────────────────────────┐
│    OBTAIN AVERAGE COSINE SIMILARITY       │──S262
└──────────────────────────────────────────┘
                  │
                  ▼
             ( RETURN )
```

## FIG. 8

```
              ( STEP S380 )
                    │
                    ▼
┌───────────────────────────────────────────────────┐
│ OBTAIN PRODUCTS OF OCCURENCE PROBABILITIES OF       │
│ WORDS Wa AND Wb AND SUM TOTAL OF PRODUCTS FOR       │──S381
│ ALL TOPICS                                          │
└───────────────────────────────────────────────────┘
                    │
                    ▼
              ╱ SUM TOTAL IS ╲      S382
            ╱  GREATER THAN OR ╲      No
            ╲  EQUAL TO TH3 ?  ╱──────────────┐
              ╲              ╱                 │
                  │ Yes                        │
                  ▼                            │
┌──────────────────────────────────────┐      │
│     OVERALL SIMILARITY ←              │──S182 │
│ (WORD SIMILARITY + SENTENCE           │      │
│  SIMILARITY)/2                        │      │
└──────────────────────────────────────┘      │
                  │                            │
                  ▼          S183              │
              ╱        ╲        No             │
            ╱ OVERALL    ╲──────────────────┐  │
            ╲ SIMILARITY ≥ TH2 ? ╱          │  │
              ╲        ╱                     │  │
                  │ Yes      S184            │  │
                  ▼                     S185 ▼  ▼
┌────────────────────┐          ┌────────────────────┐
│ WORDS Wa AND Wb    │          │ WORDS Wa AND Wb    │
│ ARE DETERNMINED    │          │ ARE NOT DETERNMINED│
│ TO BE SYNONYMS     │          │ TO BE SYNONYMS     │
└────────────────────┘          └────────────────────┘
                  │                     │
                  ▼◄────────────────────┘
             ( RETURN )
```

21

## FIG. 9

| NO. | SYNONYM GROUP |
|-----|---------------|
| 1 | present, gift |
| 2 | sickness, desease, illness |
| 3 | soccer, football |
| 4 | cell phone, mobile phone |
| ⋮ | ⋮ |
| K | online shopping, Internet shopping |

## FIG. 10

I bought a <u>present</u> for her yesterday.

I bought a <u>gift</u> for her yesterday.

## FIG. 11

My brother likes to play <u>soccer</u>.

My brogher likes to play <u>chess</u>.

**EP 3 944 098 A1**

## INTERNATIONAL SEARCH REPORT

| | International application No. |
|---|---|
| | PCT/JP2019/0045193 |

**A.  CLASSIFICATION OF SUBJECT MATTER**
G06F 16/35(2019.01)i; G06F 16/36(2019.01)i; G06F 40/35(2020.01)i
FI: G06F16/36; G06F16/35; G06F17/27 695

According to International Patent Classification (IPC) or to both national classification and IPC

**B.  FIELDS SEARCHED**

Minimum documentation searched (classification system followed by classification symbols)
G06F16/35; G06F16/36; G06F40/35

Documentation searched other than minimum documentation to the extent that such documents are included in the fields searched
Published examined utility model applications of Japan        1922-1996
Published unexamined utility model applications of Japan      1971-2020
Registered utility model specifications of Japan              1996-2020
Published registered utility model applications of Japan      1994-2020

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
|---|---|---|
| Y | WO 2019/049483 A1 (SCREEN HOLDINGS CO., LTD.) 14.03.2019 (2019-03-14) paragraphs [0042]-[0054], claim 4 | 1-2,4-8,10-13 |
| A | paragraphs [0042]-[0054], claim 4 | 3,9 |

☒  Further documents are listed in the continuation of Box C.     ☒  See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 06 February 2020 (06.02.2020) | 18 February 2020 (18.02.2020) |

| Name and mailing address of the ISA/ Japan Patent Office 3-4-3, Kasumigaseki, Chiyoda-ku, Tokyo 100-8915, Japan | Authorized officer |
|---|---|
| | Telephone No. |

Form PCT/ISA/210 (second sheet) (January 2015)

23

**INTERNATIONAL SEARCH REPORT**

| International application No. |
| --- |
| PCT/JP2019/0045193 |

C (Continuation).    DOCUMENTS CONSIDERED TO BE RELEVANT

| Category* | Citation of document, with indication, where appropriate, of the relevant passages | Relevant to claim No. |
| --- | --- | --- |
| Y | 楠牟禮 章伍 外，ユーザのメンタルモデルに基づいた Web ページデザインのリアルタイム最適化，第 9 回データ工学と情報マネジメントに関するフォーラム（第 15 回日本データベース学会年次大会）[online], 26 June 2017, [retrieval date 06 July 2017], Internet: <URL:http://db-event.jpn.org/deim2017/papers/251.pdf>, DEIM Forum 2017 C3-3, p. 5, right column, non-official translation (KUSUMURE, Shogo et al., "Real-time optimization for a web page based on the user's mental models", The 9th forum on data engineering and information management (The 15th annual conference of the Database Society of Japan) [online]) | 1-2,4-8,10-13 |
| A | JP 2010-287020 A (HITACHI, LTD.) 24.12.2010 (2010-12-24) entire text, all drawings | 1-13 |
| A | JP 2017-151838 A (TOYOTA MOTOR CORP.) 31.08.2017 (2017-08-31) entire text, all drawings | 1-13 |

Form PCT/ISA/210 (continuation of second sheet) (January 2015)

## INTERNATIONAL SEARCH REPORT
Information on patent family members

| International application No. |
| --- |
| PCT/JP2019/0045193 |

| Patent Documents referred in the Report | Publication Date | Patent Family | Publication Date |
| --- | --- | --- | --- |
| WO 2019/049483 A1 | 14 Mar. 2019 | (Family: none) | |
| JP 2010-287020 A | 24 Dec. 2010 | (Family: none) | |
| JP 2017-151838 A | 31 Aug. 2017 | (Family: none) | |

Form PCT/ISA/210 (patent family annex) (January 2015)

## REFERENCES CITED IN THE DESCRIPTION

**Patent documents cited in the description**

- JP 2016224482 A

- JP 2019052125 A

**Non-patent literature cited in the description**

- **TOMAS MIKOLOV ; KAI CHEN ; GREG CORRADO ; EFFREY DEAN.** Efficient Estimation of Word Representations in Vector Space. *arXiv : 1301.3781v3,* 2013
- **TOMAS MIKOLOV ; ILYA SUTSKEVER ; KAI CHEN ; GREG S. CORRADO ; JEFFREY DEAN.** Distributed Representations of Words and Phrases and their Compositionality. *Advances in Neural Information Processing Systems 26: 27th Annual Conference on Neural Information Processing Systems,* 2013

- **QUOC LE ; TOMAS MIKOLOV.** Distributed representations of Sentences and Documents. *International Conference on Machine Learning,* 2014, vol. 14, 1188-1196
- **DAVID M. BLEI ; ANDREW Y. NG ; MICHAEL I. JORDAN.** Latent Dirichlet Allocation. *Journal of Machine Learning Research,* 2003, vol. 3, 993-1022